# EUROPEAN PATENT APPLICATION

(11) **EP 2 645 295 A2**
(43) Date of publication of application: **02.10.2013**
(21) Application number: 13000680.2
(22) Date of filing: 08.02.2013
(51) Int. Cl.: G06F 21/62

(54) **Secure and reliable remote data protection**

(30) Priority: 27.03.2012 US 201213431579
(71) Applicant: SAP AG, 69190 Walldorf (DE)
(72) Inventor: Hebert, Cedric, 69190 Walldorf (DE)
(74) Representative: Müller-Boré & Partner Patentanwälte

(57) **Abstract**

A virtual file system may be used to determine a data file, and a splitter may then split the data file into at least a first portion and a second portion, and may provide a parity file using the first portion and the second portion. Any two of the first portion, the second portion, and the parity file include sufficient information to reconstruct the data file. A dispatcher may then distribute the first portion, the second portion, and the parity file for individual storage thereof using at least three separate storage locations.

## Description

### TECHNICAL FIELD

This description relates to computer security, and, more specifically, to remote data protection.

### BACKGROUND

Remote data hosting services provide users with an ability to store data at a remote location, usually using an intervening network to transport and/or access the data. As a result, for example, users may access the remotely-stored data using multiple devices, while minimizing memory requirements at each of the individual devices. Moreover, the hosting services may provide infrastructure for storing the data in manners which are optimized beyond an ability or desire of the users thereof, including optimizations for storing high volumes of data and providing high levels of data redundancy. Still further, the hosting services may provide desired quantities of data storage in a highly flexible manner, so as to provide, for example, as much or as little data storage required by a given user at a given time.

In contrast, of course, it is also possible for users to store data using a local computing device. In addition to laptops and other local computers, smartphones, tablet computers, and various other highly-mobile and relatively resourced-constrained computing platforms may be used. Due to their relatively small and mobile nature, however, such mobile computing platforms may be particularly susceptible to theft or other loss, so that data stored thereon may be correspondingly vulnerable to being exposed to unauthorized access.

Although concerns regarding loss of data stored on a local computing device may be mitigated or eliminated by storing the data at a remote data hosting service, the data hosting service itself remains a point of vulnerability for unauthorized data access. For example, the data stored at the remote data hosting service may be fully accessible to operators, administrators, or other providers of the data hosting service. Moreover, in the event that the remote data hosting service is hacked or otherwise subject to unauthorized access, the data may again be exposed.

Thus, for these and other reasons, existing solutions fail to provide users with an ability to make optimal use of available local and remote data storage resources for secure, reliable data storage and protection.

### SUMMARY

According to one general aspect, a system may include instructions recorded on a non-transitory computer readable storage medium and executable by at least one processor. The system may include a virtual file system configured to cause the at least one processor to determine a data file. The system may include a splitter configured to cause the at least one processor to split the data file into at least a first portion and a second portion, and further configured to cause the at least one processor to provide a parity file using the first portion and the second portion, wherein any two of the first portion, the second portion, and the parity file includes sufficient information to reconstruct the data file. The system may include a dispatcher configured to cause the at least one processor to distribute the first portion, the second portion, and the parity file for individual storage thereof using at least three separate storage locations.

According to another general aspect, a computer-implemented method for causing at least one processor to execute instructions recorded on a non-transitory computer-readable storage medium may include determining a data file, and splitting the data file into at least a first portion and a second portion. The method may include providing a parity file using the first portion and the second portion, wherein any two of the first portion, the second portion, and the parity file include sufficient information to reconstruct the data file. The method may include distributing the first portion, the second portion, and the parity file for individual storage thereof using at least three separate storage locations.

According to another general aspect, a computer program product may be tangibly embodied on a non-transitory computer-readable storage medium and comprising instructions that, when executed, are configured to cause at least one processor to determine a data file and split the data file into at least a first portion and a second portion. The instructions, when executed, may be further configured to cause the at least one processor to provide a parity file using the first portion and the second portion, wherein any two of the first portion, the second portion, and the parity file includes sufficient information to reconstruct the data file, and distribute the first portion, the second portion, and the parity file for individual storage thereof using at least three separate storage locations.

The details of one or more implementations are set forth in the accompanying drawings and the description below. Other features will be apparent from the description and drawings, and from the claims.

### BRIEF DESCRIPTION OF THE DRAWINGS

FIG. 1 is a block diagram of a system for providing remote data storage in a secure manner.

FIG. 2 is a flowchart illustrating example operations of the system of FIG. 1.

FIG. 3 is a first timing diagram illustrating an example message flow executed by the system of FIG. 1 during storage of a data file.

FIG. 4 is a second timing diagram illustrating an example message flow executed by the system of FIG. 1 during a retrieval of a stored data file.

### DETAILED DESCRIPTION

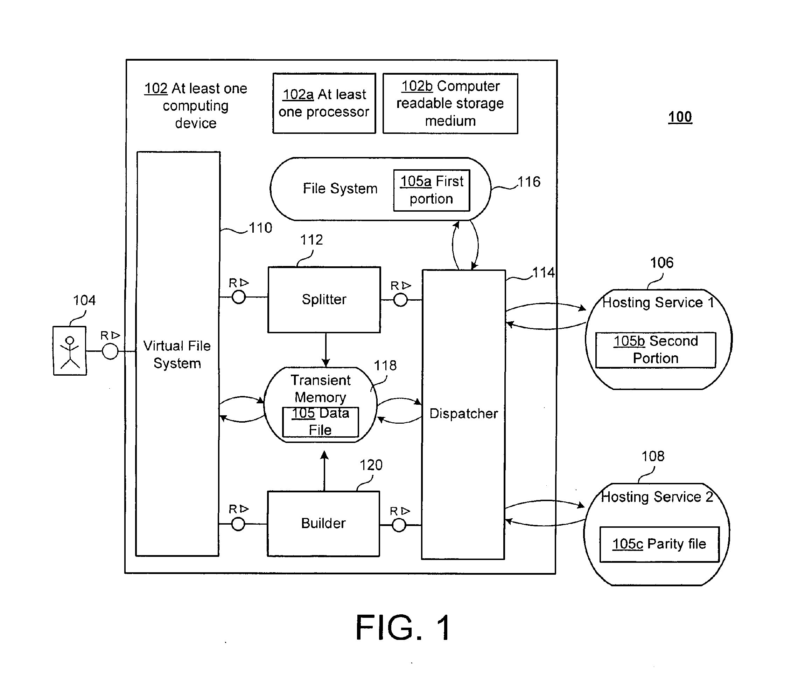

FIG. 1 is a block diagram of a system 100 for providing remote data storage in a secure manner. In the example of FIG. 1, at least one computing device 102 is utilized by a user 104 to interact with at least two hosting services 106, 108. Specifically, as described in detail herein, the system 100 enables the user 104 to store a data file 105 using three related data files 105A, 105B, 105C, any one of which may be individually and separately stored at one of the at least one computing device 102, the hosting service 106, and the hosting service 108.

As also described herein, any single one of the related data files 105A, 105B, 105C is, by itself, useless in obtaining content of the original data file 105, while any two of the at least three related data files 105A, 105B, 105C may be used together to reconstruct the original data file 105 in its entirety, without requiring availability of, or access to, the third related data file. Consequently, as described below, the example system 100 of FIG. 1 may provide the user 104 with fast, secure access to contents of the data file 105.

In the example of FIG. 1, the at least one computing device 102 should be understood to represent virtually any computing device capable of storing the data file 105 and communicating with the remote hosting services 106, 108. As such, the at least one computing device 102 may be understood to include various standard components which may be utilized to implement the techniques described herein, or different or future versions thereof. By way of example, the at least one computing device 102 is illustrated as including at least one processor 102A, as well as a computer readable storage medium 102B.

Thus, as may be appreciated, the at least one processor 102A may be utilized to execute instructions stored on the computer readable storage medium 102B, so as to thereby implement the various features and functions described herein, or additional or alternative features and functions. Of course, the at least one processor 102A and the computer readable storage medium 102B may be utilized for various other purposes. In particular, it may be appreciated the computer readable storage medium 102B may be understood to represent an example of various types of memory and related hardware and software which might be used to store desired ones of the data files 105, 105A, 105B, or 105C.

In various examples, then, the at least one computing device 102 may be understood to represent, for example, a laptop, notebook, or a netbook computer, or a tablet computer, Smartphone, or virtually any other type of mobile device capable of providing the features and functions described herein. In various such examples, as referenced above, such mobile devices may be relatively resource-constrained, and in particular, may have access to a relatively small amount of memory with respect to desired functions which might be required by the user 104. As a result, such mobile devices may benefit from leveraging the remote data storage offered by hosting services such as the hosting services 106, 108. Moreover, as also referenced above, such mobile devices may be relatively more susceptible to loss or theft, thereby making it undesirable to store unprotected and/or entire data files thereon, and again resulting in a relative advantage in the use of remote data hosting services, e.g., services 106, 108. Of course, the at least one computing device 102 may also represent traditionally non-mobile computing devices, such as, e.g., desktop computers or network workstations.

The user 104 may represent virtually any human or machine user which may benefit from access to, and use of, the system 100 of FIG. 1. For example, the user 104 may represent an individual consumer who wishes to utilize the data file 105 for personal use or enjoyment thereof, such as when the data file 105 represents a movie file, a song file, or a personal text document. In other example embodiments, the user 104 may represent a member of a business or other organization, or an administrator, owner, or other provider associated with such an organization. For example, a business may provide the at least one computing device 102 as a mobile computing platform to all of its employees. Consequently, in such example scenarios, the data file 105 may represent highly confidential business information. Of course, similar comments would apply in example scenarios in which the organization represents a government, military, or educational institution or entity.

Thus, the data file 105 itself, as referenced above, may represent virtually any data file having content or other characteristics which are desired to be kept secure and/or confidential. In this regard, many well-known encryption techniques, and various other security techniques, exist which are designed to encode or otherwise protect content of the data file 105. For example, public/private key pairs and/or related use of digital certificates may be utilized to attempt to ensure authorized access to the data file 105, whether stored at the at least one computing device 102, or at a remote data hosting service such as the services 106, 108. In simpler scenarios, other security techniques, such as requirements for username/password pairs, also may be utilized.

In contrast, although the system 100 may utilize encryption and related techniques if desired, the system 100 does not require the use of such techniques with respect to the data file 105, in order to ensure secure access thereto. Instead, as referenced above and described in detail herein, a virtual file system 110 may be utilized to provide an interface by which the user 104 may interact with the data file 105, as well as an interface with a splitter 112 which may be configured to input the data file 105 and thereafter provide the data files 105A, 105B, 105C. Specifically, the splitter 112 may be configured to divide the data file 105 into two or more portions 105A, 105B thereof, and to thereafter form the data file 105C as a parity file using the previously-obtained data files 105A, 105B.

A dispatcher 114 may then be configured to dispatch the resulting data files 105A, 105B, 105C individually and separately to each of three different locations. In the example of FIG. 1, the dispatcher 114 stores the first portion 105A of the data file using a local file system 116 and associated memory of the at least one computing device 102, and transmits the second portion 105B and the parity file 105C to the hosting services 106, 108, respectively. Of course, distribution of the data files 105A, 105B, 105C in the manner illustrated and described with respect to FIG. 1 should be understood to represent merely one example of possible distributions executed by the dispatcher 114. For example, in the example of FIG. 1, any of the data files 105A, 105B, 105C may be stored at any one of the file system 116, the hosting service 106, or the hosting service 108.

In alternative examples, it may occur that three hosting services are utilized, in which case the dispatcher 114 may distribute all three of the data files 105A, 105B, 105C among the three available hosting services, without storing any of the data files 105A, 105B, 105C at the file system 116. Of course, in example embodiments in which the splitter 112 forms more than three data files from the original data file 105, the dispatcher 114 may be configured to distribute the resulting four or more data files individually and separately among four different storage locations.

Still further in this regard, it may be appreciated that any two or more of the data files provided by the splitter 112 may be stored individually and separately at different storage locations, where such different storage locations may be understood to be provided by a single provider. For example, multiple data files provided by the splitter 112 may be stored by the dispatcher 114 at a single hosting service, e.g., by using two separate user accounts existing at the single hosting service.

In practice, the virtual file system 110 also may interface with a transient memory 118, in order to provide interaction with, and access to, the data file 105. For example, the transient memory 118 may represent or include local random access memory (RAM), perhaps implemented using a portion of the computer readable storage medium 102B. Similarly, the transient memory 118 may represent a temporary memory used by a browser application, such as in example embodiments in which the virtual file system 110 is implemented in conjunction with such a browser application. Similar comments apply with regard to selection of an appropriate transient memory that may be used in a particular context of the virtual file system 110, such as, e.g., when the data file 105 represents a song, movie, or other media file, and the virtual file system 110 is used in conjunction with a corresponding media player.

Thus, during an initial access of the data file 105, such as when the user 104 creates/modifies the data file 105 and/or obtains the data file 105 from local removable storage (e.g., from optical storage media such as a CD or DVD), or by way of download over the public internet or other appropriate network, the transient memory 118 may be configured to load the data file 105 and to provide access thereto by way of the virtual file system 110. The user 104 may thereafter interact with the data file 105 in any appropriate or desired manner. For example, the user 104 may review a movie or other content of a data file 105, or may edit text or other editable content thereof.

Generally speaking, as long as the user 104 wishes to interact with the data file 105 only in the context of transient memory 118, then operations of the splitter 112 and the dispatcher 114 may not be required. That is, for example, as long as the data file 105 remains in the transient memory 118, then by nature of the transient memory 118, the data file 105 may be removed or otherwise erased upon completion of the interactions with the user 104 and/or upon powering off the at least one computing device 102.

Upon commitment of the data file 105 to long term non-transient memory, however, or as otherwise specified or desired by the user 104, the splitter 112 may proceed as described herein with formation of the data files 105A-105C (e.g., the first portion 105A, the second portion 105B, and the parity file 105C). Thereupon, the dispatcher 114 may proceed with distributing the data files,105A-105C among the three separate storage locations 116, 106, 108.

As may be observed, and as referenced above, operations of the splitter 112 and the dispatcher 114 in this regard do not require specific encryption or other conventional security techniques. Nonetheless, as also may be observed, unauthorized access by an unauthorized user at any of the file systems 116 (i.e., at the at least one computing device 102, the hosting service 106, or the hosting service 108) is insufficient to provide the unauthorized user with access to the content of the data file 105, and instead provides only the individual one of the data files 105A, 105B, 105C illegitimately obtained by the unauthorized user during an unauthorized access at a relevant one of the storage locations 116, 106, 108.

For example, during unauthorized access to the file system 116 resulting from loss or theft of the at least one computing device 102, an unauthorized user would have access only to the first portion 105A of the data file. Similarly, during a hacking of, or otherwise unauthorized access to, one of the hosting services 106, 108, the unauthorized user would obtain access only to a single one of the respective data files 105B, 105C.

Somewhat similarly, even if the unauthorized user, through loss or theft, obtains the at least one computing device 102, the user 104 may utilize a separate computing device (not illustrated in the example of FIG. 1) to access a relevant account of the user 104 at each of the hosting services 106, 108, and thereby unlink or disconnect the at least one computing device 102 therefrom. In this way, again, even if the unauthorized user obtains access to the first portion 105A, the unauthorized user will nonetheless be prevented from obtaining either of the remaining data files 105B, 105C and thereby prevented from reconstructing the data file 105.

The user 104, on the other hand, may be provided with fast, convenient, and secure access to content of the data file 105. Specifically, as described herein, any two of the three data files 105A-105C may be sufficient to reconstruct an entirety of the data file 105. Thus, when the user 104 requests retrieval of the data file 105 using the virtual file system 110, for subsequent loading into the transient memory 118, a builder 120 may be configured to communicate with the dispatcher 114 to retrieve any two of the data files 105A-105C. Thereafter, the builder 120 may be proceed with reconstructing the data file 105 for loading thereof into the transient memory 118, and for subsequent access thereto by the user 104 through the virtual file system 110 (and/or using any appropriate user interface configured to operate in conjunction therewith).

In the example of FIG. 1, the builder 120 and the dispatcher 114 may be configured to retrieve the first portion 105A from the file system 116 as one of the two required data files need to reconstruct the data file 105, since the first portion 105A in the example is stored locally and is therefore quickly and easily accessible. Thereafter, the dispatcher 114 only has to acquire one of the data files 105B, 105C from its respective storage locations at the corresponding hosting service 106, 108.

In this regard, it may be appreciated that any access difficulty associated with one of the hosting services 106, 108 (e.g., due to system downtime or system crash at one of the hosting services 106, 108, or due to network delays or other access difficulties) may be moot, because the dispatcher 114 may simply access whichever of the relevant hosting services 106, 108 is (most) accessible at a time of retrieval of the data file 105. Moreover, it may be appreciated that any one of the data files 105A-105C may, by itself, be smaller than the entirety of the data file 105, so that storage and transmission requirements associated therewith may correspondingly be smaller than would be required with respect to the data file 105 as a whole. Thus, in the example of FIG. 1, at least for the reasons just described, the dispatcher 114 may be operable to quickly retrieve the two required data files requested by the builder 120 for reconstruction of the data file 105 therewith.

Thereafter, the reconstructed data file 105 may be stored using the transient memory 118. Thus, the user 104 may access the reconstructed data file 105 by way of the virtual file system 110 and/or any associated user interface. In this way, the user 104 may make any manipulation, modification, transmission, or other desired use of the reconstructed data file 105.

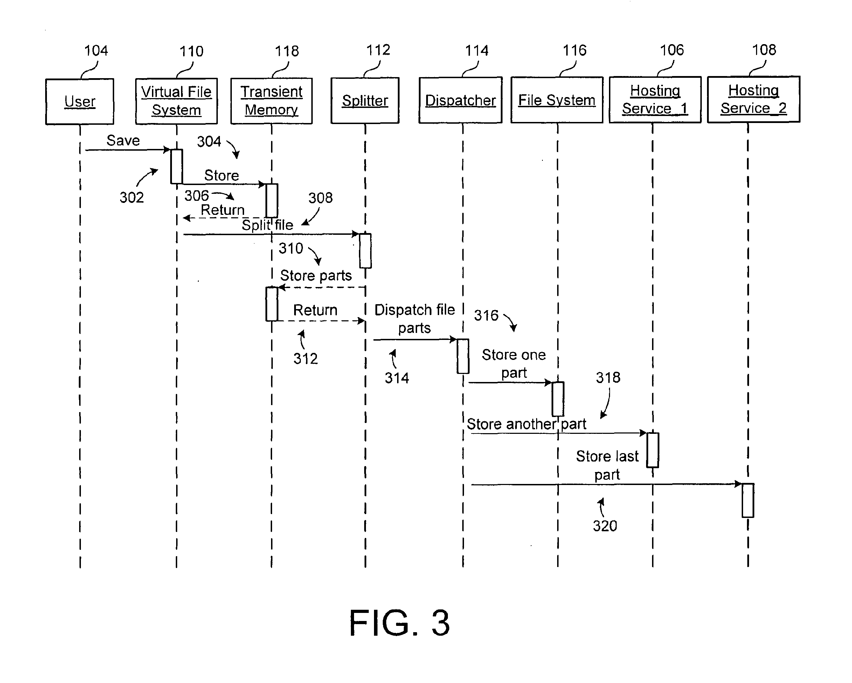

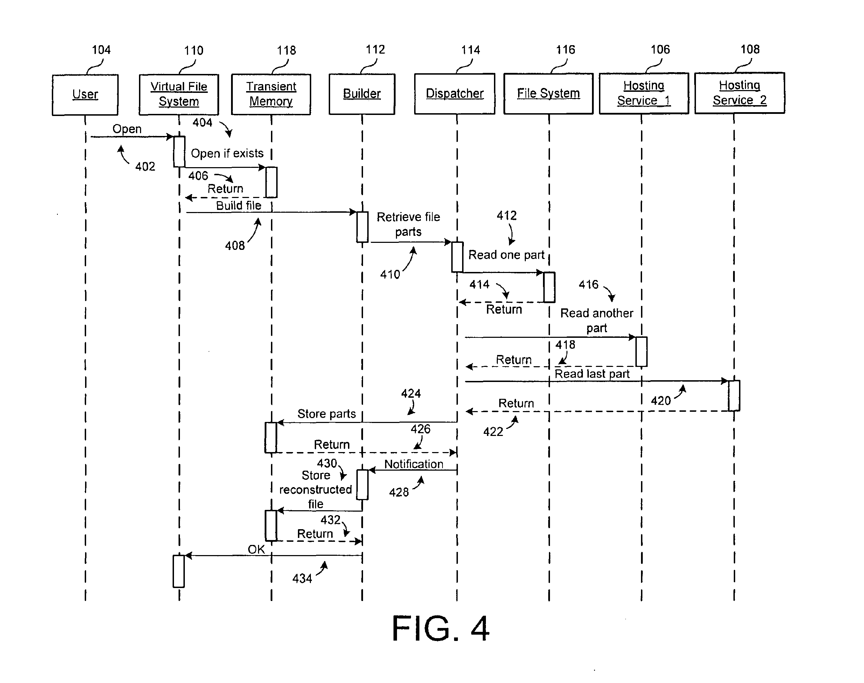

As described in more detail below, e.g., with respect to FIGS. 3 and 4, the splitter 112 and the builder 120 may use various suitable techniques for deconstructing and reconstructing the data file 105 in the manner described above. In particular examples, the splitter 112 may be configured to divide the data file 105 into the first portion 105A and the second portion 105B at a bit level of the original data file 105.

More specifically, for example, as with virtually any digital file, the data file 105 may be understood to be represented in digital form using a binary string of ones and zeros. Thus, the splitter 112 may divide the data file 105 at a bit level by alternating placement of each succeeding bit within the data files 105A, 105B. For example, in a highly shortened and simplified example, the data file 105 may include a series of bits 10111001. Then, the splitter 112 may construct the first portion 105A as including bits 1110, and may construct the second portion 105B as including the bits 0101. That is, as just referenced, the splitter 112 may alternate placement of each bit within the portions 105A, 105B.

In such example scenarios, it may be appreciated that each of the portions 105A, 105B become individually useless with respect to obtaining or otherwise determining content of the original data file 105. That is, as may be observed, an unauthorized user who obtains access to an individual one of the portions 105A, 105B would be unable to gain access to any of the content of the original data file 105. Moreover, as referenced above, it may be appreciated that in such example embodiments, the splitter 112 is not required to utilize any particular encryption technique in order to obtain these results.

Further in such example embodiments, the splitter 112 may be configured to create the parity file 105C by performing an Exclusive OR (XOR) operation using the portions 105A, 105B. For example, in the simplified example above, the splitter 112 may construct the parity file 105C as including bits (1 XOR 0) = 1, (1 XOR 1) = 0, (1 XOR 0) =1, (0 XOR 1) = 1, or a final result of 1011 for the contents of the parity file 105C.

Thus, by way of such example embodiments, the data files 105A-105C may be obtained which have the properties described herein. Specifically, as described, the resulting data files 105A-105C have the properties that any two of the data files 105A-105C are sufficient to reconstruct an entirety of the original data file 105. Moreover, as also described, any one of the data files 105A-105C, by itself, is insufficient to obtain any of the contents of the original data file 105.

Of course, the above-described scenarios are merely for the sake of example, and it will be appreciated that many other embodiments may be implemented, as well. For example, in some scenarios, the splitter 112 may split the original data file 105 into three or more portions (e.g., using every third bit to create the three such portions), and may create a parity file such that a subset of any three of the total set of three portions and the parity file are sufficient for recreating the data file 105 in its entirety.

In further examples, the splitter 112 may simply divide the data file 105 into divided portions and/or may require specific subsets of the resulting portions and a corresponding parity file or parity files in order to reconstruct the original data file 105 (e.g., may require a specific combination of a particular data file portion and associated parity file to reconstruct the original data file 105, as compared to the examples described above in which any two of the files 105A-105C may be utilized to reconstruct the original data file 105). Thus, in these and other example embodiments, as referenced above, it may be appreciated that various other functions may be used in addition to, or as an alternative, the XOR function described above, in order to obtain a desired parity file having the characteristics described herein.

In the example of FIG. 1, the file system 116 is illustrated as being used to store at least one of the data files 105A-105C, e.g., the first portion 105A. In such scenarios, as referenced herein, the user 104 may be provided with fast, virtually instantaneous access to at least one of the two required data files necessary to reconstruct the original data file 105. Consequently, as also described, the dispatcher 114 need only to retrieve one of the remaining two data files (e.g., the second portion 105B or the parity file 105C), which may be advantageous, e.g., in situations where it is slow, difficult, or impossible to communicate with one of the hosting services 106, 108.

In practice, storage of one of the data files 105A-105C and local file 116 may imply that, in case of loss or theft of the at least one computing device 102, an unauthorized user may have access to the data file stored thereon, (e.g., the first portion 105A). Of course, as described herein, access to only a single one of the data files 105A-105C is insufficient to provide such an unauthorized user with access to any of the content of the document 105.

Nonetheless, in some scenarios, the user 104 may configure the at least one computing device 102 to be logged in to one or both of the hosting services 106, 108 by default, for the inconvenience of the user 104. Somewhat similarly, it may occur that the user 104 happens to be logged into one or both of the hosting services 106, 108 at a time of the loss or theft of the at least one computing device 102. In such scenarios, a security risk may exist in that the unauthorized user may have access to one or both of the hosting services 106, 108, and may therefore be able to, in the example, access be necessary to two of the three data files 105A-105C required to reconstruct the data file 105.

However, in the example of the system 100 of FIG. 1, the user 104 may utilize a separate computing device (not shown in FIG. 1) to access either of the hosting services 106, 108. In so doing, the user 104 may disconnect or disable any such existing connection between the lost or stolen computing device 102 and a corresponding one of the hosting services 106, 108. Consequently, the unauthorized user may again have access at most to the single data file stored on the local file system 116.

In additional or alternative examples, as referenced above, it may occur that none of the data files 105A-105C are stored locally at the file system 116. Instead, all three of the data files 105A-105C may be stored at three corresponding hosting services (i.e., including a third hosting service, not illustrated in FIG. 1). In such scenarios, the user 104 may be understood to have the benefit of reconstructing the data file 105 from any computing device configured to connect with such hosting services, while still benefitting from a level of redundancy, since only two of the three such hosting services need be available at a given point in time in order to reconstruct the data file 105.

Of course, in the specific example of FIG. 1, the user 104 also may utilize virtually any computer to connect with the hosting services 106, 108, and need not use the at least one computing device with the first portion 105A stored thereon. This is true since, as described, the second portion 105B and the parity file 105C at the hosting services 106, 108 are sufficient to reconstruct the data file 105.

Thus, in the example of the system 100 of FIG. 1 and variations thereof, some of which are discussed herein, security for data files may be provided in a manner which does not require encryption or other significant overhead. Moreover, such security may be provided to a single user for management of personal files, but also may be provided on an enterprise-wide level for the benefit of a large number of employees or other users.

In all such cases, the virtual file system 110, or variations thereof, may be utilized to provide the user 104 with easy, intuitive access to the data file 105, without requiring specialized knowledge or actions on the part of the user 104. Indeed, in some example implementations (e.g., in which an administrator provides and oversees operations of the system 100 for the benefit of the user 104), the user 104 may essentially be unaware of the operational details of the system 100. That is, for example, the administrator may select the hosting services 106, 108 and configure the virtual file system 110, the splitter 112, the dispatcher 114, and the builder 120 to operate as described herein, without requiring involvement or knowledge of the user 104.

Additionally, or alternatively, the user 104 may be enabled to configure and operate the system 100 in a desired manner. For example, the user 104 may be able to select a number of hosting services to be used, replace one hosting service with another, designate use (or non-use) of the local file system 116, or otherwise configure and operate the system 100. Many other features and functions of the system 100, or variations thereof, are described herein, or would be apparent to one of skill in the art.

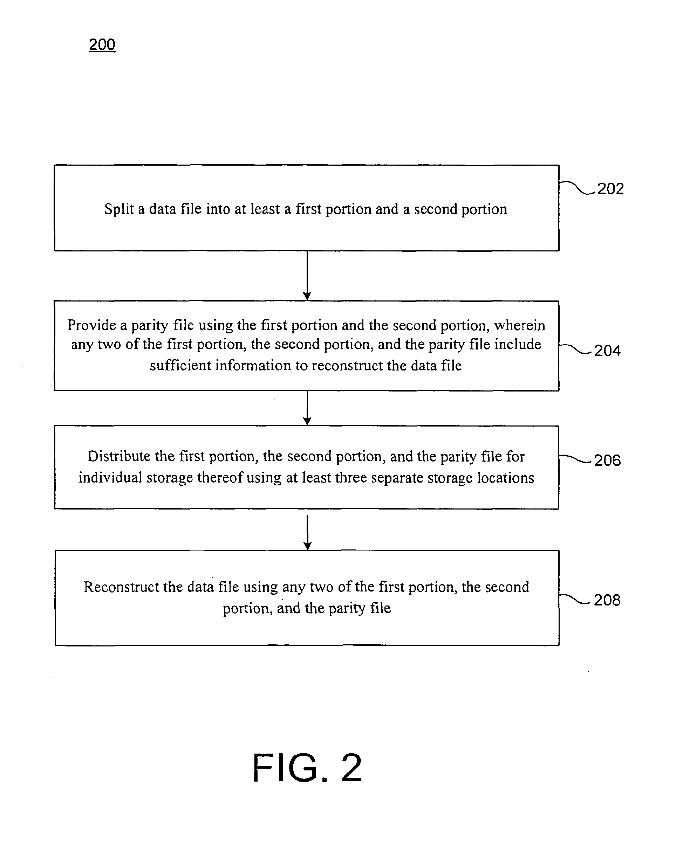

FIG. 2 is a flowchart 200 illustrating example operations of the system 100 of FIG. 1. In the example of FIG. 2, operations 202-208 are illustrated as separate, sequential operations. However, it may be appreciated that additional or alternative operations may be included in various other example embodiments, and/or that one or more operations may be omitted. Further, it may be appreciated that any two or more of the operations may be performed in a partially or completely overlapping or parallel manner, or in a nested, iterative, or looped fashion. Thus, it may be appreciated that any such operations may be executed in any manner suitable for providing the features and functions described above with respect to the system 100 of FIG. 1, or variations thereof.

In the example of FIG. 2, a data file may be split into at least a first portion and a second portion (202). For example, the splitter 112 may be configured to split the data file 105 into the first and second portions 105A, 105B. As referenced above, such splitting may occur at the request of the user 104, e.g., at a time when the user 104 wishes to commit the data file 105 from the transient memory 118 or other current storage location to a longer term, more secure storage location. As also described, the splitting may occur at a bit level of the data file 105.

A parity file may be provided using the first portion and the second portion, where any two of the first portion, the second portion, and the parity file include sufficient information to reconstruct the data file (204). For example, the splitter 112 of FIG. 1 may be further configured to utilize the first portion 105A and the second portion 105B to construct the parity file 105C. In the examples described above, the splitter 112 may perform, in the examples above in which the portions 105A, 105B are constructed at the bit level of the data file 105, an XOR operation with respect to the portions 105A, 105B. In this way, the splitter 112 may construct the parity file 105C at the bit level, as well. As described, any two of the resulting data files 105A-105C thus contain sufficient information to reconstruct the original file 105, without requiring use of a remaining third file.

The first portion, the second portion, and the parity file may be distributed for individual storage using at least three separate storage locations (206). For example, the dispatcher 114 may be configured to distribute the data files 105A-105C to the file system 116, the hosting service 106, and the hosting service 108, respectively. As referenced, the dispatcher 114, in alternative embodiments, may utilize three or more hosting services, may optionally not use local storage provided by the file system 116, and/or may use a single hosting service to provide two or more of the separate storage locations.

As also described, all such configuration options may be set by the user 104 and/or by an administrator or other provider of the system 100. During actual operation, the dispatcher 114 may act in a manner which is partially or completely transparent to the user 104. For example, the user 104 may simply be required to select "save" in the context of the graphical user interface provided by the virtual file system 110, in order to cause the dispatcher 114 to execute its configured dispatching operations.

Thus, at a later time, the data file may be reconstructed using any two of the first portion, the second portion and the parity file (208). For example, the builder 120 may receive an instruction from the user 104 by way of the virtual file system 110 to reconstruct the data file 105. At such time, the builder 120 may instruct the dispatcher 114 to collect any two of the data files 105A-105C, in a most-expedient or optimized fashion.

For example, in the example of FIG. 1, the dispatcher 114 may first retrieve the first portion 105A from the local file system 116, and may then retrieve either the second portion 105B or the parity file 105C, depending upon a known or otherwise determined availability and relative latency of each of the hosting services 106, 108, with respect to one another. Of course, upon encountering any difficulty or delay in retrieving a desired one of the data files 105A-105C, the dispatcher 114 and/or the builder 120 may simply obtain and/or utilize the remaining third data file in order to reconstruct the data file 105.

In practice, in the examples above in which the splitter 112 constructs the portions 105A, 105B at a bit level of the data file 105, it may be appreciated that the builder 120 may reconstruct the data file 105 using the portions 105A, 1058, simply by interleaving the bits of the data files 105A, 105B. When combining the parity file 105C with either of the portions 105A, 105B, the builder 120 may again perform the XOR operation, using the available one of the portions 105A, 105B.

Then, having thus obtained both of the portions 105A, 1058, the builder 120 may again reconstruct the data file 105 simply by interleaving the bits thereof. In a specific example, the dispatcher 114 may retrieve the first portion 105A from the file system 116, and may retrieve the parity file 105C from the hosting service 108. Thereupon, the builder 120 may perform an XOR operation between the first portion 105A and the parity file 105C to thereby obtain the second portion 105B, and thereafter may interleave the bits of the first portion 105A and the second portion 105B to reconstruct the original data file 105.

FIG. 3 is a timing diagram illustrating more detailed example operations of the system 100 of FIG. 1 during file storage operations. Specifically, in the example of FIG. 3, it is assumed that the user 104 is in possession of the data file 105, and wishes to utilize and store the data file 105 as described above with respect to FIG. 1.

Thus, in the example of FIG. 3, the user 104 may initially interact with the virtual file system 110, to thereby execute an initial "save" operation (302) with respect to the data file 105. For example, as referenced above, the virtual file system 110 may provide an associated graphical user interface which displays available data files to the user 104 as if the data files were stored at the user's local computer, even though, as described, some or all of a given data file may in fact be stored at one or more remote hosting services.

In the example of FIG. 3, the virtual file system 110 initially executes a storage operation (304) for storing the data file 105 using the transient memory 118. Consequently, if desired by the user 104, a return operation (306) may be performed at any time that the user 104 wishes to utilize the data file 105 while the data file 105 is stored in the transient memory 118.

In conjunction with such temporary storage at the transient memory 118, the virtual file system 110 may initiate a splitting operation (308) with respect to the data file 105, implemented by the splitter 112. Upon splitting of the data file 105 into the portions 105A, 105B, and upon generating the parity file 105C in conjunction therewith, the splitter 112 may temporarily store the resulting data files 105A-105C in a store operation (310) using the transient memory 118.

As referenced, above the transient memory 118 may represent a specific memory area which may be used as a cache for files currently in use by the user 104. Due to its transient nature, contents of the transient memory 118 may be deleted upon session termination, power off of the computer, or in response to various other defined events (e.g., in response to an idle period of a specified amount of time).

Thus, as illustrated in FIG. 3, the transient memory 118 may be utilized by the user 104 for current access to the data file 105, and may also be utilized by the splitter 112 to store resulting data files 105A-105C. Then, at an appropriate time, such as in response to a user command or upon one of the events specified above as being associated with emptying of the transient memory 118, the splitter 112 may consummate a return operation (312), to thereby provide the data files 105A-105C to the dispatcher 114 for execution of a dispatch operation (314).

Specifically, as shown, the dispatcher 114 may execute a store operation (316) for storing one of the data files 105A-105C using the local file system 116, while performing a second storage operation (318) to store a second one of the data files 105A-105C using the hosting service 106, and, in the example, may perform a final storage operation (320), to store a remaining one of the data files 105A-105C using the hosting service 108.

In example implementations, the dispatcher 114, in performing the various operations 314-320, may be implemented as an agent which is connected to the hosting services 106, 108 over the appropriate network, e.g., the public Internet. It will be appreciated that a configuration for connection of the dispatcher 114 to the hosting services 106, 108 may be dependent upon specific interfaces of the corresponding hosting services 106, 108, and may be implemented using dedicated wrappers on the part of the dispatcher. Additionally, as shown and described, the dispatcher 114 may be in direct communication with the local file system 116.

FIG. 4 is a timing diagram illustrating more detailed example operations of the system 100 of FIG. 1 during file retrieval operations. Specifically, FIG. 4 illustrates example operations 402-434 which may be associated with retrieval of the data file 105 by the user 104 subsequent to the file storage operation of FIG. 3.

Thus, in the example of FIG. 4, the user 104 may initially attempt to execute an open operation (402) with respect to the virtual file system 110. That is, as described above, the user 104 may simply click on, or otherwise select, the desired data file from within a graphical user interface supplied by the virtual file system 110.

If the data file currently exists within the transient memory 118, then the virtual file system 110 may execute an open operation (404) with respect to the transient memory 118, so that the transient memory 118 may itself execute a return operation (406) through interaction with the virtual file system 110. If, however, the data file 105 does not currently exist within the transient memory 118, then the virtual file system 110 may initiate a build operation (408) for reconstructing the data file 105.

As shown, the virtual file system 110 may thus instruct the builder 120 to execute a retrieve operation (410) including communicating with the dispatcher 114 to communicate with the file system 116 and the hosting services 106, 108. Specifically, as shown, the dispatcher 114 may perform a first operation (412) with respect to the file system 116, so that the file system 116 may respond by executing a return operation (414) to return whichever of the three data files 105A-105C is stored thereon to the dispatcher 114.

Similarly, the dispatcher 114 may execute a read operation (416) with respect to the hosting service 106, to thereby cause the hosting service 106 to execute a return operation (418) which provides whichever of the data files 105A-105C has been stored using the hosting service 106 to the dispatcher 114. At the same time, the dispatcher 114 may execute another read operation (420) with respect to the second hosting service 108, to thereby cause the hosting service 108 to execute a return operation (422) with respect to the third and last data file of the data files 105A-105C stored thereon.

The dispatcher 114 may then execute a store operation (424) during which the retrieved data files 105A-105C are stored using the transient memory 118. Upon successful storage, the transient memory 118 may execute a return operation (426) in which the dispatcher 114 is notified of the successful storage. The dispatcher 114 may then execute a notification operation (428), to thereby notify the builder 120 that the required data files are available for reconstruction of the data file 105.

The builder 120 may thereafter execute a store operation (430) in which the transient memory 118 is instructed to store the reconstructed data file 105, whereupon the transient memory 118 may execute a return operation (432) to notify the builder 120 that the reconstructed data file 105 has been stored and is available for access through the virtual file system 110. Consequently, as shown, the builder 120 may execute a final notification operation (434) in which the virtual file system 110 is notified that the reconstructed data file 105 is available for access by the user 104.

Although the example of FIG. 4 illustrates retrieval of all three data files 105A-105C, it may be appreciated that from the above description that only two of the three data files 105A-105C are required for reconstruction of the original data file 105. Consequently, variations of the example of FIG. 4 may include implementations in which the dispatcher retrieves two of the three data files 105A-105C in a optimized manner. For example, the dispatcher 114 may retrieve one of the data files 105A-105C from the local file system 116, and then, upon receipt of a first one of the remaining two data files 105A-105C from one of the hosting services 106, 108, may proceed with storage of the two retrieved data files within the transient memory 118 and subsequent reconstruction of the data file 105 therefrom by the builder 120.

Thus, as described above, if a computing device of the user 104 is configured according to the above description of the at least one computing device 102 of FIG. 1 becomes lost or stolen, the user 104 may simply install a corresponding software package which includes the virtual file system 110, the splitter 112, the dispatcher 114, and the builder 120, using a new device. The user 104 may thereafter simply configure the dispatcher 114 to access relevant hosting services 106, 108 (e.g., may provide login information to access an account of the user 104 at each of the hosting services 106, 108). Thereafter, upon identification of the data file 105 by the user 104 for opening thereof, the virtual file system 110 may commence the operation described above with respect to FIG. 4, to thereby retrieve two of the three data files 105A-105C from the hosting service 106, 108. In this way, the builder 120 may proceed with reconstructing the complete data file 105 for access by the virtual file system, and may also reconstruct the third, missing one of the data files 105A-105C, for storage thereof by the dispatcher 114 using the local file system 116.

In conjunction with the above, as referenced above, the user 104 may also log into the same user account at the hosting services 106, 108, and revoke any existing connections between those accounts and the lost or stolen computing device. As a result, any one who comes into possession of the lost or stolen computing device would have access only to the one of the data files 105A-105C stored using the local file system 116, and therefore would be unable to reconstruct or access any portion of the data file 105.

Further, during normal usage of the system 100 of FIG. 1, it may occur that one of the hosting services 106, 108 becomes unavailable. Nonetheless, it will be appreciated that the user 104 may continue to access the data file 105, utilizing the remaining two available ones of the data files 105A-105C. Even if one of the hosting services 106, 108 becomes permanently unavailable, the user 104 may simply reconstruct the third, missing one of the data files 105A-105C that have been stored thereon, for storage thereof using an alternative hosting service.

Further, in case one of the hosting services 106, 108 is hacked by an outside, unauthorized user, or if an employee or other individual associated with one of the hosting services 106, 108 accesses data files stored thereon in an unauthorized manner, it will be impossible for all such unauthorized users to reconstruct or access any portion of the data file 105 using the thus-accessed data file (unless the unauthorized user has or obtains access to the second hosting service and/or the local file system 116, and has knowledge of which data file stored thereon correspond to the data file 105, which represents unlikely scenarios. Thus, as described, the systems and operations of FIGS. 1-4 enable secure, scalable, convenient storage and access of all types of data files, in a manner which is computationally straightforward.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.
Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

Particularly, there is described a computer program product, the computer program product being tangibly embodied on a non-transitory computer-readable storage medium and comprising instructions that, when executed, are configured to cause at least one processor to: determine a data file; split the data file into at least a first portion and a second portion, provide a parity file using the first portion and the second portion, wherein any two of the first portion, the second portion, and the parity file include sufficient information to reconstruct the data file; and distribute the first portion, the second portion, and the parity file for individual storage thereof using at least three separate storage locations.

Further particularly, the instructions, when executed, are further configured to cause the at least one processor to: reconstruct the data file using any two of the first portion, the second portion, and the parity file.

Further particularly, the instructions, when executed, are further configured to cause the at least one processor to: split the data file into the first portion and the second portion at a bit level of the data file.

Further particularly, the instructions, when executed, are further configured to cause the at least one processor to: provide the parity file including executing an XOR operation using pairs of bits from each of the first portion and the second portion.

Further particularly, at least one of the at least three separate storage locations includes a local file system.

Further particularly, the at least three separate storage locations include at least two remote data hosting services accessed using at least one network.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the embodiments.

## Claims

1. A system including instructions recorded on a non-transitory computer readable storage medium and executable by at least one processor, the system comprising:
a virtual file system configured to cause the at least one processor to determine a data file;
a splitter configured to cause the at least one processor to split the data file into at least a first portion and a second portion, and further configured to cause the at least one processor to provide a parity file using the first portion and the second portion, wherein any two of the first portion, the second portion, and the parity file includes sufficient information to reconstruct the data file; and
a dispatcher configured to cause the at least one processor to distribute the first portion, the second portion, and the parity file for individual storage thereof using at least three separate storage locations.

2. The system of claim 1, further comprising a builder configured to cause the at least one processor to reconstruct the data file using any two of the first portion, the second portion, and the parity file.

3. The system of claim 2, wherein the builder is configured to cause the at least one processor, in a response to a loss of one of the first portion, the second portion, and the parity file at a corresponding storage location thereof, to reconstruct the lost one of the first portion, the second portion, and the parity file, using the remaining two of the first portion, the second portion, and the parity file, and to thereafter store the reconstructed one of the first portion, the second portion, and the parity file at a same or different storage location.

4. The system of any one of the preceding claims, wherein the virtual file system is configured to cause the at least one processor to access the data file from within a transient memory.

5. The system of any one of the preceding claims, wherein the splitter is configured to cause the at least one processor to split the data file into the first portion and the second portion at a bit level of the data file.

6. The system of claim 5, wherein the splitter is configured to cause the at least one processor to provide the parity file including executing an XOR operation using pairs of bits from each of the first portion and the second portion.

7. The system of any one of the preceding claims, wherein at least one of the at least three separate storage locations includes a local file system.

8. The system of any one of the preceding claims, wherein at least one of the at least three separate storage locations include a remote data hosting service accessed using a network.

9. The system of claim 8, wherein the at least three separate storage locations include at least two remote data hosting services accessed using at least one network.

10. A computer-implemented method for causing at least one processor to execute instructions recorded on a non-transitory computer-readable storage medium, the method comprising:
determining a data file;
splitting the data file into at least a first portion and a second portion,
providing a parity file using the first portion and the second portion, wherein any two of the first portion, the second portion, and the parity file include sufficient information to reconstruct the data file; and
distributing the first portion, the second portion, and the parity file for individual storage thereof using at least three separate storage locations.

11. The method of claim 10, further comprising reconstructing the data file using any two of the first portion, the second portion, and the parity file.

12. The method of claim 10 or 11, wherein splitting the data file includes splitting the data file into the first portion and the second portion at a bit level of the data file.

13. The method of claim 12, wherein providing the parity file includes executing an XOR operation using pairs of bits from each of the first portion and the second portion.

14. The method of any one of the preceding claims 10 to 13, wherein the at least three separate storage locations include at least two remote data hosting services accessed using at least one network.

15. A computer program product, comprising computer-readable instructions that, when loaded and executed on a suitable system, are configured to cause at least one processor to execute the steps of a method according to any one of the preceding claims 10 to 14.
